# EUROPEAN PATENT SPECIFICATION

(11) **EP 2 663 813 B1**
(45) Date of publication and mention of the grant of the patent: **26.11.2014**
(21) Application number: 12705725.5
(22) Date of filing: 10.01.2012
(51) Int. Cl.: F24J 2/07, F24J 2/46, F16L 27/00

(54) **CONNECTOR FOR ABSORBER TUBES IN A CONCENTRATING SOLAR POWER PLANT**
VERBINDER FÜR ABSORBERROHRE IN EINEM KONZENTRIERENDEN SOLARKRAFTWERK
RACCORDEMENT POUR TUBES ABSORBEUR DE CENTRALES SOLAIRES À CONCENTRATION

(30) Priority: 10.01.2011 IT RM20110004
(43) Date of publication of application: 20.11.2013
(73) Proprietor: Meccanotecnica Umbra S.p.A., 06042 Campello Sul Clitunno (IT); Advanced Research Consulting S.r.l., 10123 Torino (IT)
(72) Inventor: D'ORAZIO, Nunzio, I-06042 Campello sul Clitunno (IT); ROLANDO, Adriano, I-10123 Torino (IT)
(74) Representative: Santi, Filippo
(86) International application number: PCT/IT2012/000011
(87) International publication number: WO 2012/095886

(56) References cited:
- EP-A1- 2 325 536
- EP-A2- 1 998 120
- DE-A1-102009 008 426
- DE-U1-202007 009 182
- US-A- 4 302 033
- US-A- 5 050 913

## Description

The present invention relates to connectors of sun irradiated receiving tubes in concentrating solar power plants.

More specifically, the invention relates to connectors suitable for a quick connection of receiving tubes of concentrating solar power plants. Said solar pipes or solar boilers, tank to the following invention, are easily connected in order to realise concentrating solar power plants usually applied on parabolas (parabolic through solar plants) but not exclusively (Fresnel technology).

Said invention allows, moreover, to compensate the linear dilatations of solar pipes, due to temperature differences taking place as a consequence of sun irradiation and of the heating of a thermal carrier fluid flowing inside the above said solar pipes.

The present invention increases the reliability of such concentrating solar power plants and dicreases the critical points that take place during the installation operations of said plants. It allows, finally, an operative flexibility which can not be obtained by the known techniques.

As it is well known, the operation of a concentrating solar power plant provides for amplification of the sun irradiation through concentrating the irradiation itself by means of concentrating mirrors, generally but non necessarily having a parabolic shape, conveying irradiation on a receiving tube or solar pipe, in order to increase the thermal power collected by the tube and favor the increase enthalpy of a thermal carrier fluid (heating at high temperature, change of phase, etc...) flowing inside it, or anyway a thermodynamic transformation favoring thermochemical transformations within the fluid (chemical reformulation of the thermal carrier fluid).

The fluid is subsequently used for a series of applications exploiting such thermodynamic state, such as for example applications connected with the conversion of thermal power in electric power by means of trasnformation plants using gas turbines and steam turbines or combined plants; applications connected to reformulation processes (reforming) of pure or mixed light hydrocarbons (such as for example methane, propane, buthane, liquified petroleum gas, methanol) aimed at the enrichment of fuel into fuel fractions having a higher value (hydrogen or lighter hydrocarbons) or to the decomposition or reformulation of fuels from their original chemical formulation to simpler molecular forms.

Even if the applications of solar boilers are broader, in the following reference will be made in particular to their use as receiving tubes in plants aimed at the production of electric power according to the technology of thermodynamic sun concentrating on parabolic mirrors ("parabolic through collectors") or in accordance with Fresnel technology, without forthis reason limiting the scope of the present invention to this application only.

The technology allowing for the use of solar energy for the production of electric power, herein below simply defined "thermodynamic sun", is based on the concentration of solar energy on a receiving tube positioned on the focus of a parabolic mirrors system and inside which a thermal carrier fluid flows (at present selected, for example, amongst diathermal oils and fuse salts) increasing its temperature (according to current appliocations up to 550-600°C), such thermal power being subsequently put at disposal, possibly through an intermediate fluid, by means of an accumulation section of thermal power, for the conversion into mechanical and/or electric power, through a thermodynamic transformation cycle, such as for example Rankine, Hirn, Joule or Ericsson cycle, according to which the thermal carrier fluid or the intermediate fluid represent the high temperature source.

The concentration ratio obtained by parabolic mirrors (at present equal to 50-70) allows for the tube to increase its temperature, so to increase enthalpy of the thermal carrier fluid flowing inside it (usually in order to increase temperature but also thanks to passages of state. The fluid temperature level (or enthalpy level) is, therefore, sensibly higher with respect to values which are possible without concentrating solar energy.

In this way it is possible to broaden the use of concentrated solar energy and transferred at high temperature, or enthalpy, to sectors of application which would not be possible without concentration, in particular, as already said, for feeding thermodynamic cycles for the convertion of thermal power into mechanical and electric power, or to fuel reforming or to other applications requiring for high temperature or enthalpy.

According to the prior art, said solar pipes have well defined dimensional and production standards. According to the prior art such pipes are constituted by:
a) an internal tube, made of a metallic material, the thickness of which is such to resist to the pressures of the thermal carrier fluid, covered according to the prior art with specific materials (such as CERMED®) for the reduction of re-irradiated energy and the increase of the absorption coefficient;
b) a co-axial tube, made of glass, suitably thermally insulated from the solar pipe and realised with a material which is transparent to the solar radiation and opaque to the radiation re-irradiated by the metal tube; in such a way a significant fraction of the energy re-irradiated by the metal tube (as a consequence of its high operative temperature) is recovered;
c) a hollow space between the metal tube and the glass tube, maintained under vacuum, avoiding the transmission of thermal power between the metal tube and the tube made of transparent material for the phenomena of thermal conduction and convection;
d) a static seal system between the metal tube and glass tube, together with suitable elastic (metallic) bellows allowing for absorbing the differental axial dilatations between the tube made of metal and that made of transparent material (glass).

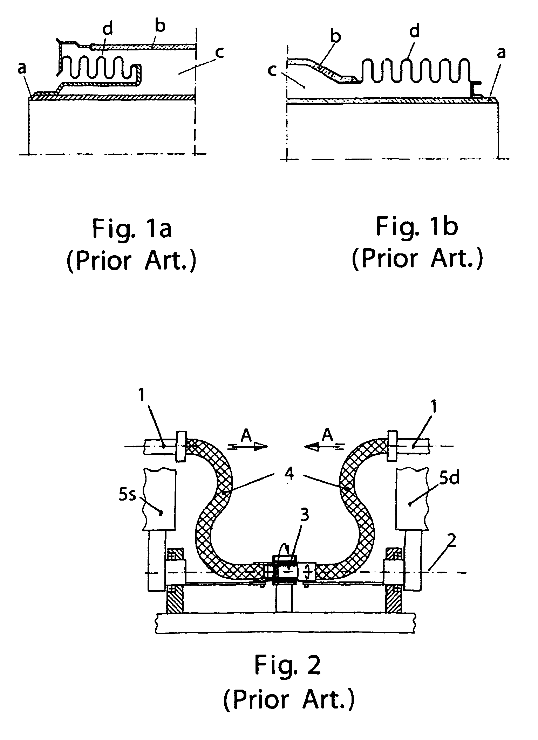

Elements a), b), c) and d) are integrated in a single unit realising the described functions. With reference to the prior art, such tubes are shown for example in figures 1 a and 1 b.

In particular, figure 1a shows a configuration according to which the terminal part of the solar pipe shows the compensation system of the different lengthening of glass (exterior, b) and metal (interior, a) according to the prior art. The space c is such to avoid the transmission of thermal power by convection and conduction. It is evident that, in the case shown in figure 1a, the compensation cause compression of the elastic bellow d.

The configuration shown with reference to figure 1b, at the terminal part of the solar pipe shows a compensation system of the different lengthening of glass (exterior, b) and metal (interior, a) according to a second solution of the prior art. Space c is such to avoid the transmission of thermal power by convection and conduction. In this case, compensation causes tension of the elastic bellow d.

The concentrating solar power plant is realised by arranging such tubes at the focus of concentrating parabolas, thus realising units having great length (present technology provides for lengths of hundreds of meters). Such aggregated concentrating parabolas rotate by means of a specific actuation system and track, in this way, the position of the solar disc.

According to the prior art technology, the solutions of concentrating solar power plants with rotating parabolic mirrors tracking the solar disc (also called, in English language, parabolic through), have the following characteristics:
a) the dimensions of the solar pipes (which are the elementary units of the plant) are about 4m of length and less then 0,01 m of diameter;
b) a series of solar pipes, connected until reaching a length of about 12m, form a so called parabol, which is the unit where the concentration of solar energy on the solar pipe occurs;
c) a series of parabolas, until reaching lengths of 50-75m, form the so called solar strings, which are moved by a common actuation system orienting them to tracking the solar disc;
d) a series of solar strings until reaching lengths of 100 - 150m realise a so called solar collector, which can increase of a certain value (depending on its length) the temperature of the thermodynamic fluid;
e) a series of solar collectors, working in series, until reaching lengths of about 600m, form a so called ring (or loop), increasing the temperature of the thermodynamic fluid until desired values;
f) a series of solar rings (loop), working in parallel, form the so called solar field.

The building of a solar field, the elementary units of which were defined above for indicative purposes, without affecting generality, poses, according to the prior art known today, building and managing problems, concerning:
1) the connection between solar pipes on a parabol;
2) the connection between parabolas to obtain a string;
3) the connection between strings to obtain a collector.

The prior art technology gives, consecutively for points 1), 2) and 3), the following solutions.
1. Solar pipes are pre-assembled in a workshop with lengths of about 4m, welded on site where the solar plant is being built until a length equal to that of the parabol, thus realising a single equivalent receiving unit. The prior art does not present compensation elements of thermal dilatations occurring to the equivalent receiving unit. More in particular, the metal tube is free to expand as a consequence of the temperature increase and such dilatations, then, are transferred to the following parabol. Obviously, the single solar pipe, as is derived by figures 1a and 1b previously already described, is provided with a system compensating the different dilatations of the tube made of transparent material and the metal one inside it, constituted by metal bellows; according to prior art, nevertheless, metal tubes, once they are welded to one another until a length equal to that of the parabol, are free to dilatate together.
2. The solar pipe, having the length of a parabola (made welding together elementary solar pipes) is welded to that of the subsequent parabol, thus realising units having a greater length, already called strings, thus connecting a definite number of concentrating parabolas. In such a way, the differental dilatations of a tube having length equal to that of the parabola are added to those of the other parabolas until a string is formed.
3. A single string, or portions of adjacent strings, or different adjacent strings, are rotated (thus rotating a definite group of parabolas) by a common actuation system, realised by means of electric engines or hydraulic or pneumatic drivers or drivers based on another technology, putting the parabolas in line with the solar disc so that the sun rays (which are parallel) can have an optimal incidence on the mirrors forming the parabolas. Such actuation system is usually arranged on a metal structure, or a structure made of concrete or mixed or other, for example called pillar or tower, mechanically separated by the groups of parabolas which are moved. In order to realise such common rotation, the solar pipe (which reached a notable length by subsequent weldings made on single solar pipes) is conducted on the axis of rotation of the parabolas by means of "flexible sleeves made of metal - textile fabric", an example of which is shown in figure 2, the manufacture of which is such to absorb the notable dilatations of the solar pipe (sum of the elementary contributions of all the solar pipes welded together) and torsions occurring because the actuation systems adjacent to the one considered are not perfectly sincronous. Such operation of conducting the solar pipe from a hight which is that of the focus of the parabolas to that of the rotating system of the parabolas themselves is cinematically needed in order to allow the rotation itself. Said connection element, defined "flexible sleeve made of metal-textile fabric", for exemplificative purposes, but that can be made also differently, allows to obtain first the compensation of the longitudinal dilatation of all solar pipes connected thereof. Secondly, said "flexible sleeve made of metal-textile fabric" allows to obtain the compensation of rotations not being perfecly syncronous of adjacent parallel groups of parabolas.

In particular, according to European patent application n. EP1998120 this kind of connection is obtained as shown in 2, where two side-by-side strings are shown, the arrow A indicates the direction of the linear dilatations of the two receiving tubes of the side-by-side strings and where by the numeral notation 2 it is indicated the axis of rotation of the parabolic mirrors. With 3 it is indicated the sealing system allowing for the relative rotation of parabolas of adjacent strings and with 4 the respective flexible tubes for compensating linear dilatations of the receiving tube. The string or collector on the right, 5d, has a different actuation system with respect to that of the collector on the left, 5s. The connection obtained has the purpose of allowing the total lengthening of elements 1 (due to thermal dilatations of mechanically connected solar pipes) and different rotations, inevitably being present between the right part and the left part, the actuation systems of the movement for tracking the solar disc (systems 5s and 5d) being different.

Therefore, the compensations due to different temperatures of the metal solar pipe occurs for each piece of length equal to different tenth of meters, more in particular 100-150m, each time The height of the tube itself is conducted to that of the rotating system.

For example, but without any limitation to the generality of the present invention, it is possible to consider, by one of the prior art technologies, for providing for the use of fuse salts as thermal carrier fluid:
- the length of an elementary solar pipe is of about 4m;
- the length of a parabola is of about 12m;
- the length of a string is of about 50m, but can be, according to the nowadays technology, even longer (75 m or more);
- the length of a ring (loop) is of about 600m, such length being such that it grants that, in case fuse salt is being used as thermal carrier fluid and flows with a definite mass flow, can be heated from 290°C to 550°C;
- the capacity of the plant is increased by increasing the number of rings (loop) in parallel; each ring, according to the prior art using fuse salts, giving a contribution of produced electrical power equal to about 500kW;
- the parabolas which are moved at the same time are from 8 to 12, and the length of the solar pipe rotated at the same time is equal to 100-150m.

According to the prior art a series of critical point must be considered, of which the main are reported herein below, with reference to connections between elementary solar pipes and between parabolas and between strings or portions thereof and for weldings operated on site.

First, weldings are made on site, i.e. where the plant is built. This implies the welding process itself does not always have an acceptable quality, with the frequent need for post treatments. Also the verification of welding quality can not be made as it could in a protected ambient. It must be noted, in fact, that the sites where such concentrating solar power plants are built are isolated sites, characterised by high sun irradiation, set to be also in the future in remote areas and desert, even obstile from an environmental point of view. The presence of dusts and the working difficulty make in all these cases not easy to realise a good quality welding. Inevitably, then, welding creates asituation of discontinuity.

Moreover, the plant building process presents itself a certain difficulty. Once the solar pipes are fixed to the soil for a length equal to that of a parabol, the tubes themselves are conducted to the focal axis of the parabola and fixed to specific cylindrical hinges. This operation is repeated for all the parabolas making up a string and then a collector. During such a operation, the maintenance of co-axialitty of the solar pipe with the focus of the parabola can not be always granted. The perfect matching of the axis of the solar pipe and that of the parabolas lined to each other is an important element of functionality of the plant as a whole and strongly affects the capacity of the plant itself. Strict mounting specifications fix the precision of the alignment of the parabolas with the focus. The solutions according to the prior art present strong limitations in that sense.

Moreover, on a single ring (loop) of collectors (at present having a length of about 600m) there are about one hundred fifty weldings, inevitably constituting a number of critical points very high. Further, if all the parts are considered which are interested by the respective welding wires, which according to the prior art do not have any protection from the irradiation of the tube made of transparent material, they represent a source oflosses which is avoided only partially. In fact, according to the prior art, such zones are insulated by a material (for example made up of ribbons, wrapped or encasing protections) avoiding irradiation, but representing anyway discontinuities and bridges of thermal losses. Such losses reflect on the thermal capacity of the solar field.

In addition, in case of misfunction of one or more solar pipes, or misfunction of one or more parabolas, or maintenance involving the cited components, but also larger sections of the solar plant, according to the prior art, the different elements must be separated (the tube is cut) with all the critical issues implied. These operations must be made on site, under difficult working conditions. The restoration of operability requires then to weld again the tubes involving other critical issues.

Moreover, the compensation connected to the dilatations of the solar pipe, taking into account different temperatures depending on the temperature increase of the thermal carrier fluid (in a loop of 600m, in case of fuse salt as thermal carrier fluid having a definite flow, the solar pipe has a difference of temperature at its terminals of about 250-300°C) is made every 100-150m, in particular by the connection elements made of textile-metal material conducting the solar pipe back to the height of the rotating system, so that the lengthening ofeach elementary tube sums to one another (tube per tube). The presence of weldings on each elementary tube (at present about 4m long) involves differential dilatations on the welding wire, generating stresses of thermal nature affecting the welding itself. As an example, without limiting the generality of the present invention, for a solar pipe 100m long there can be different thermal dilatations depending on the position of the tube portion: at the terminal section of the plant such lengthenings are equal to about 1000mm, an lengthening very difficult to compensate.

Another solution is disclosed in document DE202007009182U1. This document shows a connection of concentrating solar power plants, comprising two terminals for coupling respectively with the internal metal tubes of two solar pipes to be connected, said terminals being provided with means for reciprocal rigid mechanical movable coupling which comprises a ring nut. The ring nut has a thread for tightening the connection.

Claim 1 differs therefrom, in that said ring nut (303, 303') is assembled on one of said terminals (302, 302') and free to rotate around it. The other terminal (301, 301') is provided on its external circumference
- either with a plurality of pins (305) fitting with a corresponding number of shaped and angled slots, realised on said ring nut (303)
- or of a thread (305') engaging with a corresponding counter-thread (305") realised on said ring nut (303');

Each of said means for reciprocal rigid mechanical movable coupling of said terminals (301, 302; 301', 302') comprising at least a seat (311', 311"), for housing a respective portion of an anti-rotation pin (312', 312").

In this context it is inserted the solution according to the present invention, with the aim of solving the above said problems through the realisation of a connection system between elementary tubes and/or between strings and/or between groups of strings or more simply between elementary tubes of any number taking the place of weldings according to the prior art and overcoming the limits of the connectors with removable coupling of the known type. Such connection systems, made up by connections of concentrating solar power plants, for economy of description will be called in the following solar connectors.

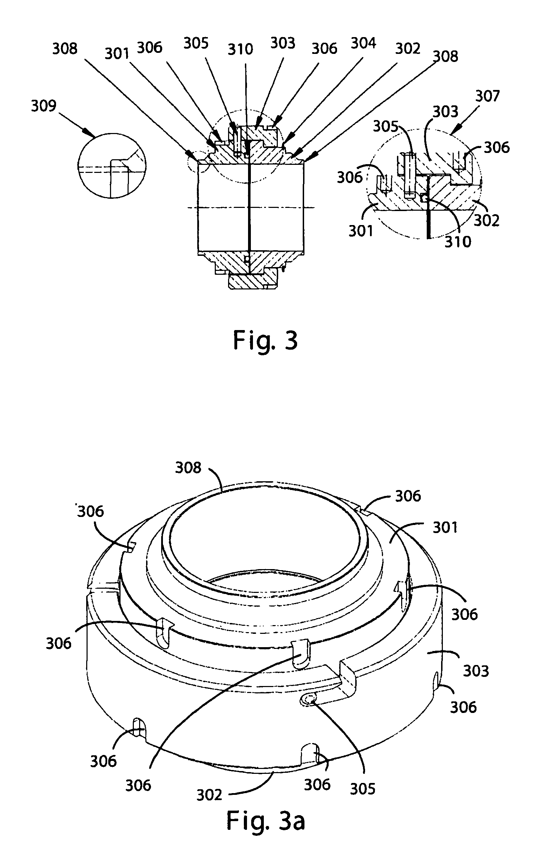

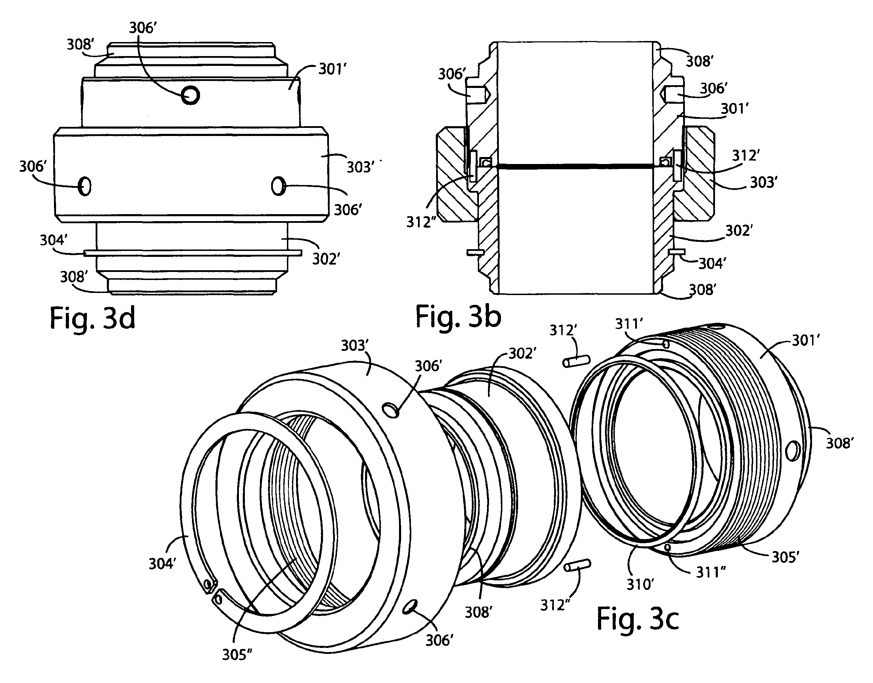

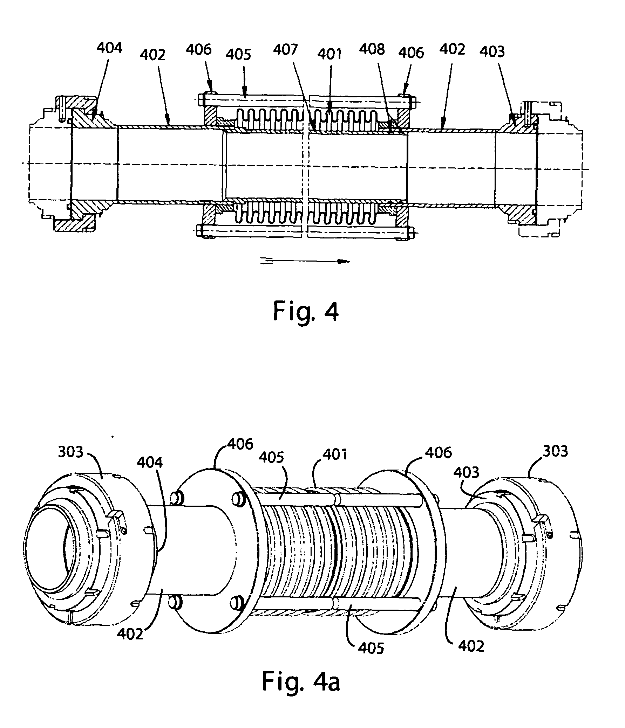

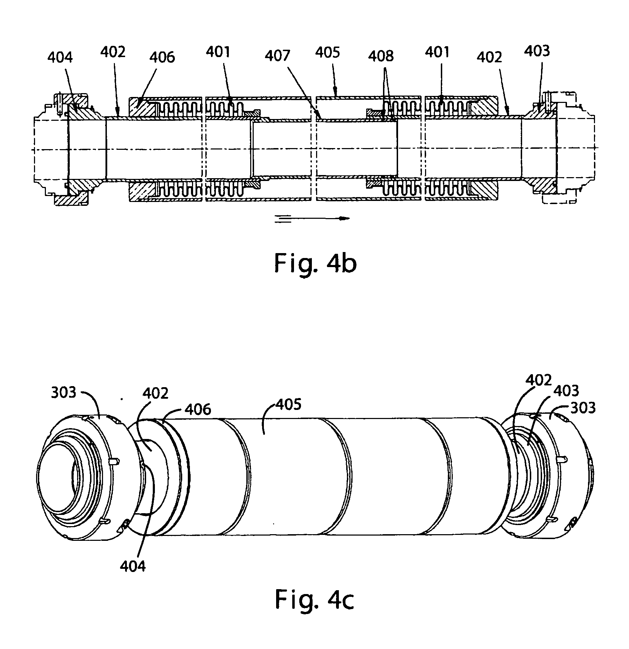

Without limiting the generality of the solar connectors according to the present invention, in the following of the present specification reference will be made to two fundamental embodiments: the first, shown with reference to figure 3 and referred to as solar connector-A, is able to make a connection between two adjacent elementary tubes and characterised by ease of connection and disconnection and to protect against the external irradiation; and the second, shown with reference to figure 4 and referred to as solar connector-B, combining with the function of solar connectors-A also that of compensating dilatations connected with temperature differences of the connected pieces by means of the system of the invention.

In the version compensating dilatations of solar pipes (solar connectors B), the present invention also solves the problem occurring in sleeves made of textile fabric and/or reinforced by mechanical fibres at present used for such a function and to allow small rotation between the strings of solar pipes.

The adoption of such connection systems (solar connectors A and B) allows in addition for easily sectioning (interrupting) with a certain quickness the units which are connected that should have disfunctions or accidental breakages or needs of maintenance or other making necessary to temporarily or repeatedly exclude them from the solar plant. Such operations turns out to be particularly comfortable if the solar pipes adopt the connection systems forming the object of the present invention, not requiring in such cases cutting the tubes or something else.

The purpose of the present invention is therefore that of realising connectors for a concentrating solar power plant allowing for overcoming the limits of the solutions of connection (weldings) according to the prior art and of the flexible joints subjected to flexo-torsion and to obtain technical-operative results solving the previously described problems.

Further aim of the invention is that said connection systems can be realised with substantially low costs, as far as both production and costs of connection with the elementary solar pipes is concerned.

Not last aim of the invention is that of realising connection systems for a concentrating solar power plant which are substantially simple, safe and reliable.

In order to solve the problems of the solutions according to the prior art, and achieve the above said goals, it is proposed according to the present invention a first type of connection between elementary solar pipes, having the function of ensuring the continuity between adjacent tubes integrating in the connection system the protection against irradiation towards the exterior, symptomatic of a loss of thermal power.

Moreover, it is proposed as an embodiment of the present invention a second type of connection between elementary solar pipes having the functions of:
- ensuring continuity between adjacent tubes, integrating into the connection system protection against irradiation towards exterior, symptomatic of a loss of thermal power;
- ensuring the function of compensation of the axial dilatations due to the difference of temperature characterising the elementary solar pipes or more than one elementary solar pipe anyway they are connected to one another.

It is therefore a further embodiment of the present invention a connection of concentrating solar power plants, comprising two terminals for coupling respectively with the internal metal tubes of two solar pipes to be connected, said terminals being provided with means for reciprocal rigid mechanical movable coupling.

Preferably, said terminals are coupled with said metal tubes of said solar pipes by welding.

Moreover, according to the present invention, said means for reciprocal rigid mechanical movable coupling of said terminals can comprise a ring nut assembled on one of said terminals and free to rotate around it, the other terminal being provided on its external circumference alternatively of a plurality of pins fitting with a corresponding number of shaped and angled slots, realised on said ring nut, or of a thread engaging with a corresponding counter-thread realised on said ring nut.

Said means for reciprocal rigid mechanical movable coupling of said terminals further comprise a seat for the housing of an elastic static seal, alternately realised on one of said two ends.

According to the present invention, each of said means for reciprocal rigid mechanical movable coupling of said terminals comprises at least a seat for housing a respective portion of an anti-rotation pin, and preferably comprises at least two seats, having different size or shape, respectively for housing a respective portion of two anti-rotation pins, having corresponding size or shape.

In particular, always according to the invention, each of said two terminals can be connected to a corresponding terminal of a compensation apparatus comprising a metal bellow, connected by means of welding to lateral hubs connecting the bellow with two terminals linking with said two terminals coupled with said internal metal tubes of solar pipe, and further comprising means for strengthening and protecting from mechanical stresses due to an imperfect axial alignment of the system and means for facilitating the flow within the connection.

Preferably, said means for strengthening and protecting from mechanical stresses comprise a plurality of tie rods, supported by flanges in turn coupled with said metal bellow and with said lateral hubs; and said means for facilitating the flow within the connection comprise a telescopic conveyor system and preferably further comprise an elastic seal, positioned at the terminal of said conveyor.

Preferably said lateral hubs of said compensation apparatus are both straight, or both curved, or one is curved and the other is straight.

Finally, according to the present invention, said connection of concentrating solar power plants may comprise a radiation screen.

The advantages of the solution of the present inventionare evident, the same proposing at the same time respectively:
- a connection system between tubes which are irradiated by direct or concentrated solar light, realising the continuity of the tube, with reference to the circulation of a thermal carrier fluid collecting said solar energy and transforming it in an enthalpic increase;
- a connection system like that of the previous point, integrating with the described function that of compensating the temperature dilatations occurring on different solar pipes mechanically connected to one another, due to the fact that inside said tubes a thermal carrier fluid flows which, heating itself, causes on said tubes an axial temperature gradient;
- a connection system as per the previous points realising a deviation of the solar pipe taking the axis of the solar pipe from the height of the focus to that of the rotating system of the parabolas, moved by a same rotating system of the parabolas, functional to the tracking of the solar disc; said deviation of the solar pipe can be in a deseeding period (from the height of the focus of the parabola ti that of the rotating system) or ascending (from the height of the axis of the rotating system of parabolas to that of the focus of the same parabolas);
- a connection system as already described at the previous points, integrating a suitable system for reducing irradiation of the solar pipe towards the exterior and the consequent energy loss.

The present invention will now be described, for illustrative non limiting purposes, accordiing to its preferred embodiments, with particular reference to the figures of the enclosed drawing, wherein:
- figure 1a shows a cross section view of a portion of a first compensation system of the different lengthening between glass and metal in a solar pipe according to prior art;
- figure 1b shows a cross section view of a portion of a second compensation system of the different lengthening between glass and metal in a solar pipe according to prior art;
- figure 2 shows a schematic view of a connection system of strings of solar pipes according to prior art;
- figure 3 shows a cross section view of a solar connector according to a first embodiment of the present invention;
- figure 3a shows a perspective view of the solar connectors of figure 3;
- figure 3b shows a cross section view of a solar connector according to a second embodiment of the present invention;
- figure 3c shows an exploded perspective view of the solar connectors of figure 3b;
- figure 3d shows a lateral view of the solar connectors of figure 3b;
- figure 4 shows a cross section view of a solar connector according to a third embodiment of the present invention;
- figure 4a shows a perspective view of the solar connectors of figure 4;
- figure 4b shows a cross section view of a solar connector according to a fourth embodiment of the present invention;
- figure 4c shows a perspective view of the solar connector of figure 4b;
- figure 5 shows a cross section view of a solar connector according to a fifth embodiment of the present invention;
- figure 5a shows a perspective view of the solar connector of figure 5;
- figure 5b shows a cross section view of a solar connector according to a sixth embodiment of the present invention;
- figure 6 shows a solar connector according to a seventh embodiment of the present invention; and
- figure 7 shows a solar connector according to an eigth embodiment of the present invention.

Figures 3 and 4 refers to two type previously defined as solar connector A and solar connector B. For illustrative non limitative aims it is also shown a solution defined as solar connector C, allowing for making a variation of direction of the thermal carrier fluid upwards or downwards (in the following also referred to with the acronym "SX" and "DX") making the two ascending and descending pieces at the terminals of the single collector.

In particular, figure 3 and figure 3a show a first basic version of the quick connection system according to the present invention, lacking a compensation system of the dilatations of the tube. The device is constituted by an terminal 301 and an terminal 302, to which a ring nut 303 is connected, by means of a lock 304, said ring nut 303 being free of rotating around itself with respect to the terminal 302. The terminal 301 is provided on the external circumference of a plurality of pins 305 engaging with a corresponding number of shaped and angled slots, realised on said ring nut 303 and a series of pits 306 for the insertion of a correspondent spanner; such pits 306 can be made with different profiles (magnification 307), corresponding to the type of keys that can be found on trade (or specially designed to carry out the described purpose). The ring nut 303 also is provided with a series of pits 306, for the insertion of the spanner allowing for mechanical connection.

On one of the two extremities of each terminal 301 and 302 the hub is housed for anchoring by welding of the corresponding elementary unit during the steps of pre-assembly in workshop; the profile of the hub will be realised in consideration of the type of union which is desired to obtain between tube and end; butt welding (as referred in figure 3 with the number 308) or as an alternative by superimposition (as shown by magnificaton 309).

One of the two terminals (in the case of figure 3 the terminal 301) is provided with a special seat for housings an elastic element of static seal 310, when the two terminals 301 and 302 are joined one another and closed by means of the ring nut 303; the elastic sealing element 310 can ve realised with a different profile.

The quick connection between the two terminals consist in joining the two faces of the terminals 301 and 302 (after the insertion in its seat of the elastic static seal element 310), cause pins 305 to be inserted into the pits of the ring nut 303, tighten the pack with the spanners and insert the lock screw 304 for safety.

The working principles described above are always at the basis of the solution proposed according to the present invention. Particulars described make reference to one of the many possible and equivalent solutions: therefore the described solution does not limit the generality of the present invention.

In particular, according to a second embodiment of the present invention, shown with reference to figures 3b, 3c and 3d, the device is comprised of an terminal 301' and an terminal 302', to which a ring nut 303' is connected, by means of a lock 304', said ring nut 303' being free of rotating around its terminal 302'. The terminal 301' is provided on its external circumference with a thread 305' engaging with a corresponding counter-thread 305", realised on said ring nut 303' and a series of pits 306' for the insertion of a corresponding spanner. The ring nut 303' also is provided with a series of pits 306', for the insertion of the spanner allowing for a mechanical connection. Obviously, the presence of the pits 306' can be overcome by realising at least a portion of the external surface of the terminal 301' and of the ring nut 303' with a polygonal section.

On one of the two extremities of each terminal 301' and 302' a hub 308' is realised for locking by welding the corresponding elementary unit during pre-assembly in workshop; in the case shown, the profile of the hub is of the kind aimed at a butt welding of the tube and the end.

In this case also, one of the two terminals (in the case of figures 3b and 3c the terminal 301') is provided with special seat for housing a static seal elastic element 310', when the two terminals 301' and 302' are joined to one another and tightened by the ring nut 303'; the elastic sealing element 310' can be realised with a different profile, in the specific case shown in figures 3b and 3c of the kind called C-ring, with a C shaped section, and it is made of metal.

In order to grant the mounting of the tube segments with a predefined orientation, two housings 311', 311" are present on the terminal 301', respectively for housing two pins 312' and 312", having different size, intended to insert in corresponding housings (not shown) on the terminal 302'.

The quick connection between the two terminals consists in joining the two faces of the terminals 301' and 302' (after the insertion of the static seal elastic element 310' into the seat), so that the pins 312', 312" (previously inserted in the respective housings 311', 311") insert themselves in the corresponding housings of the terminal 302'; then engage the counter-thread of the ring nut 303' with the thread of the terminal 301', tighten the package with the spanners and insert the lock ring 304' for safety.

According to the embodiments shown with reference to the figures herein below, connection systems are shown, previously already called solar connector B and solar connector C in which the two terminals of the basic element are again present, previously already called solar connectors A, and in which the embodiment described with reference to figures 3 and 3a is always shown. It is intended that nothing prevents said connection systems to use the terminals described with reference to figures 3b, 3c and 3d, or other equivalent embodiments, all anyway based on the inventive concept of the present invention as claimed in claim 1.

Figure 4 and figure 4a show the version of the quick connection system integrated with the thermal dilatations compensation system. As can be seen in figure 4, the device is provided at its ends with two terminals 403 and 404 for quick connection as described with reference to the basic solution according to the embodiment shown in figures 3a and 3b (solar connector A). Between these two elements a compensation system is arranged composed of a metal bellow 401, connected by means of welding to lateral hubs 402, suitably sized and shaped, connecting the bellow to the two terminals 403 and 404 for quick connection. Externally, the metal bellow is protected by possible stresses, due to a non perfect axial alignment (within certain limits) of the system, by means of tie rods 405, supported by flanges 406 in turn connected by welding to the metal bellow 401 and to lateral hubs 402, i.e. supported by a different equivalent mechanical solution of reinforcement.

Inside the bellow 401, a telescopic conveyor system 407 promotes the flowing of the flow, limiting the instantaneous accumulation of the carrier fluid in the loops of the bellow; a further reduction of the access of the carrier fluid in the loops of the bellow can be achieved by usung a special elastic sealing system 408, positioned at the end of the conveyor 407.

Said sealing elements can be made according to any of the known solutions.

The progressive lengthening of the pipes connected to the two ends of the device due to the progressive increase of the temperature of the thermal carrier fluid flowing in the tube itself, causes the compression of the loops of the bellow 401 and the internal axial sliding of the conveyor 407, compensationg for the elongation of the system.

According to the solution shown in figure 4, for illustrative and non limitative purposes, the bellows are stressed, because of the temperature induced different dilatations, to compression. Anyway all the solutions according to which the elastic bellows are caused to react under traction also fall within the scope of protection of the present invention: for example, within the general form shown in figure 4b and figure 4c. The figures themselves are provided as an example and do not constitute a limitation of validity with respect to different solutions according to which the compensation element works under traction. For this reason figures 4b and 4c show a possible solution according to which a solar connector of type B is made so to compensate the differental dilatations by putting the elastic element under traction.

The versions of the system described above allow the progressive junction of the single modules of a receiving tube and the junction with compensation of the two strings of the system (one at the right and one at the left of the pillar or or different structure for the movement and control of the parabolic mirrors). Being it necessary to compensate the dilatations at both sides of the two strings making up any single collector, it is part of the present invention also the making of another version, defined as solar connector C, in the two versions "DX" and "SX" for the side ends of the single collector.

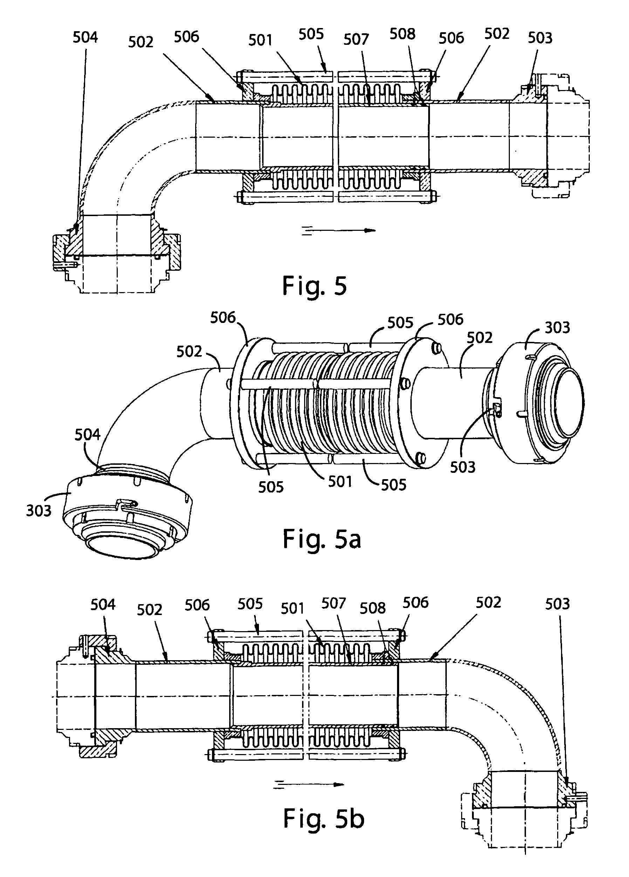

Figures 5, 5a and 5b show the two versions cited above that, as can be seen, are different from the solar connector B described with reference to figures 4, 4a, 4b and 4c because of the following characteristics:
- the small size of the compensation space; and
- the use of a 90° bend on one of the two lateral hubs, to allow the ascending and descending path of the solar pipe at the beginning and at the end of each single collector to bring the axis of the tube at the same height of the axis of rotation of the parabolic mirrors.

Moreover, the elements indicated in figures 5 and 5a with reference numbers 501, 502, and so on until reference number 508, correspond to the elements indicated in figure 4 with reference numbers 401, 402, and and so on until 408.

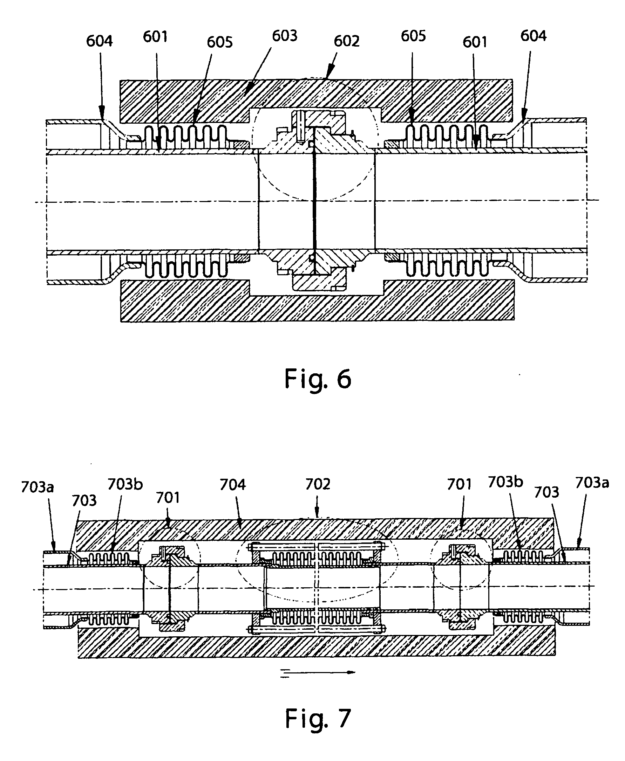

The solutions called solar connectors of type A, B and C, according to prior art, must provide for a special protection system from sun irradiation towards the exterior. In fact, all the solutions of solar connector work at a temperature which os that of the metal tube inside the solar pipe. According to the prior art, as already noted, the junction of the elementary tubes is made by welding on site and the screen from irradiation is made by means of shells or equivalent systems insulating the metal part of the welding, thus realising a lower temperature at the exterior at which temperature there is no significant irradiation towards the exterior. Such solutions must be foreseen also for the solar connectors according to the present invention (figure 6 and 7).

In particular, figure 6 shows a solar connector of type A according to the present invention provided with radiation screen. In figure 6 the extremities of the internal metal tubes 601 of two adjacent solar pipes are shown, and outside them the ends of the external tubes made of glass 604, together with the relative bellows 605 for compensating the differential dilatations between internal tubes 601 and external tubes 604. In addition, figure 6 shows, inside the cyrcle 602, a solar connector of type A according to the present invention and, to cover the latter and the bellows 605, a radiation screen 603.

With reference to figure 7, then, it is shown a solar connector of type B according to the present invention provided with a radiation screen. In figure 7 the ends of the internal metal tubes 703 of two adjacent solar pipes are shown, and outside them the ends of the external tubes made of glass 703a, together with the relative bellows 703b for compensating the differential dilatations between internal tubes 703 and external tubes 703a. Figure 7 further shows, within the cyrcles 701, two solar connectors of type A according to the present invention and within the cyrcle 702, a solar connector of type B according to the present invention. Moreover, a radiation screen 704 is shown for covering the latter, the two solar connectors 701 of type A and the bellows 703b.

It is obvious that other structurally different solutions having the same function of connecting and protecting from the irradiation towards the exterior and of compensating the dilatations due to temperature differences also fall within the scope of protection defined by the present invention.

In conclusion, according to the present invention different kind of connectors between tubes collecting direct solar energy or solar energy concentrated by parabolic mirrors are proposed, according to which the tube moves along the focal axis of the parabolas, in this way giving continuity to the solar pipes with respect to the flowing of a thermal carrier fluid inside. Said systems also implement the function of compensating the temperature dilatations occurring on the metal tube of the solar pipe in consequence of the axial temperature gradients on the same tubes due to the circulation of the thermal carrier fluid flowing inside the tubes and heating because of the sun irradiation.

Said connection systems also implement the functions of reducing the energy re-irradiated towards the exterior because of the high temperature reached by said connection and compensation systems.

Without reducing the application field of said connection systems, they find their more natural application in concentrating solar power plants (thermodynamic solar plants, "parabolic through" or Fresnel technology or any other geometry of the solar energy capitation system), where the aim of the plant is the production of electric power through internal or external combustion thermodynamic cycles and/or reforming of pure hydrocarbons or mixed with lighter fuel fractions.

The present invention was described for illustrative non limitative purposes, according to its preferred embodiments, but it has to be understood that any variation and/or modification can be made by the skilled in the art without for this reason escaping the relative scope of protection, as defined by the enclosed claims.

## Claims

1. Connection of concentrating solar power plants, comprising two terminals (301, 302; 301', 302') for coupling respectively with the internal metal tubes of two solar pipes to be connected, said terminals (301, 302; 301', 302') being provided with means for reciprocal rigid mechanical movable coupling wherein said means for reciprocal rigid mechanical movable coupling comprise a ring nut (303, 303') assembled on one of said terminals (302, 302') and free to rotate around it, the other terminal (301, 301') being provided on its external circumference
- with a plurality of pins (305) fitting with a corresponding number of shaped and angled slots, realised on said ring nut (303); or
- of a thread (305') engaging with a corresponding counter-thread (305") realised on said ring nut (303');
each of said means for reciprocal rigid mechanical movable coupling of said terminals (301, 302; 301', 302') comprising at least a seat (311', 311"), for housing a respective portion of an anti-rotation pin (312', 312").

2. Connection of concentrating solar power plants according to claim 1, **characterised in that** said terminals (301, 302; 301', 302') are coupled with said metal tubes of said solar pipes by welding.

3. Connection of concentrating solar power plants according to any of the previous claims, **characterised in that** said means for reciprocal rigid mechanical movable coupling of said terminals (301, 302; 301', 302') further comprise a seat for the housing of an elastic static seal (310, 310'), alternately realised on one of said two terminals (301, 302; 301', 302').

4. Connection of concentrating solar power plants according to any of the previous claims, **characterised in that** each of said means for reciprocal rigid mechanical movable coupling of said terminals (301, 302; 301', 302') comprises at least two seats (311', 311"), having different size or shape, respectively for housing a respective portion of two anti-rotation pins (312', 312"), having corresponding size or shape.

5. Connection of concentrating solar power plants according to any of the previous claims, **characterised in that** each of said two terminals (301, 302; 301', 302') is connected to a corresponding terminal of a compensation apparatus comprising a metal bellow (401), connected by means of welding to lateral hubs (402) connecting the bellow with the two terminals (403, 404) linking with said two terminals (301, 302; 301', 302') coupled with said internal metal tubes of solar pipe, and further comprising means for strengthening and protecting from mechanical stresses due to an imperfect axial alignment of the system and means for facilitating the flow within the connection.

6. Connection of concentrating solar power plants according to claim 5, **characterised in that** said means for strengthening and protecting from mechanical stresses comprise a plurality of tie rods (405), supported by flanges (406) in turn coupled with said metal bellow (401) and with said lateral hubs (402).

7. Connection of concentrating solar power plants according to claim 5 or 6, **characterised in that** said means for facilitating the flow within the connection comprise a telescopic conveyor system (407).

8. Connection of concentrating solar power plants according to claim 7, **characterised in that** said means for facilitating the flow within the connection further comprise an elastic seal (408), positioned at the terminal of said conveyor (407).

9. Connection of concentrating solar power plants according to any of claims 5-8, **characterised in that** said lateral hubs (402) of said compensation apparatus are both straight, or both curved, or one is curved and the other is straight.

10. Connection of concentrating solar power plants according to any of the previous claims, **characterised by** comprising a radiation screen.

## Patentansprüche

1. Verbindung von konzentrierenden Solarkraftwerken, umfassend zwei Anschlüsse (301, 302; 301', 302') zur Verbindung jeweils mit den internen Metallröhren von zwei Solarröhren, die miteinander zu verbinden sind, wobei die Anschlüsse (301, 302; 301', 302') mit Mitteln versehen sind zur wechselseitigen, starren, mechanisch beweglichen Verbindung, wobei die Mittel zur wechselseitigen, starren, mechanisch beweglichen Verbindung einen Gewindering (303, 303') aufweisen, der auf einem der Anschlüsse (302, 302') montiert ist und frei ist, um darum zu rotieren, wobei der andere Anschluss (301, 301') auf dessen äußerer Umfangsfläche vorgesehen ist
- mit einer Vielzahl von Stiften (305) die in eine entsprechende Anzahl von geformten und angewinkelten Schlitzen passen, die auf dem Gewinderinge (303) realisiert sind; oder
- einem Gewindes (305'), das in ein entsprechendes Gegengewinde (305'') eingreift, das auf dem Gewindering (303') realisiert ist;
wobei jedes der Mittel zur wechselseitigen starren, mechanisch beweglichen Verbindung der Anschlüsse (301, 302; 301', 302') mindestens einen Sitz (311', 311'') aufweist zur Aufnahme eines jeweiligen Abschnitts eines Antidrehstifts (312', 312'').

2. Verbindung von konzentrierenden Solarkraftwerken gemäß Anspruch 1, **dadurch gekennzeichnet, dass** die Anschlüsse (301, 302; 301', 302') durch Schweißen mit den Metallröhren der Solarröhren verbunden sind.

3. Verbindung von konzentrierenden Solarkraftwerken gemäß einem der vorangehenden Ansprüche, **dadurch gekennzeichnet, dass** die Mittel zur wechselseitigen, starren, mechanisch beweglichen Verbindung der Anschlüsse (301, 302; 301', 302') weiterhin einen Sitz aufweisen für das Gehäuse einer elastischen statischen Dichtung (310, 310'), die abwechselnd realisiert ist auf einem der beiden Anschlüsse (301, 302; 301', 302').

4. Verbindung von konzentrierenden Solarkraftwerken gemäß einem der vorangehenden Ansprüche, **dadurch gekennzeichnet, dass** jedes der Mittel zur wechselseitigen, starren, mechanisch beweglichen Verbindung der Anschlüsse (301, 302; 301', 302') mindestens zwei Sitze (311', 311'') aufweist, die jeweils eine unterschiedliche Größe oder Form haben, zur jeweiligen Beherbergung von mindestens einem Abschnitt von zwei Antirotationsstiften (312', 312'') mit einer entsprechenden Größe oder Form.

5. Verbindung von konzentrierenden Solarkraftwerken gemäß einem der vorangehenden Ansprüche, **dadurch gekennzeichnet, dass** jeder der beiden Anschlüsse (301, 302; 301', 302') mit einem entsprechenden Anschluss einer Kompensationsvorrichtung verbunden ist, die einen Metallbalg (401) aufweist, der durch Schweißen verbunden ist mit seitlichen Naben (402), die den Balg mit den zwei Anschlüssen (403, 404) verbinden, in Verbindung mit den beiden Anschlüssen (301, 302; 301', 302'), die mit den internen Metallröhren der Solarröhren verbunden sind, und weiterhin umfassend Mittel zur Verstärkung und zum Schutz vor mechanischen Belastungen aufgrund einer unperfekten Axialausrichtung des Systems und Mitteln zur Erleichterung der Strömung innerhalb der Verbindung.

6. Verbindung von konzentrierenden Solarkraftwerken gemäß Anspruch 5, **dadurch gekennzeichnet, dass** die Mittel zur Verstärkung und zum Schutz vor mechanischen Belastungen eine Vielzahl von Spannstäben (405) aufweisen, die durch Flansche (406) gestützt werden, die wiederrum mit dem Metallbalg (401) und mit den seitlichen Naben (402) verbunden sind.

7. Verbindung von konzentrierenden Solarkraftwerken gemäß Anspruch 5 oder 6, **dadurch gekennzeichnet, dass** die Mittel zur Erleichterung der Strömung innerhalb der Verbindung ein Teleskopfördersystem (407) aufweisen.

8. Verbindung von konzentrierenden Solarkraftwerken gemäß Anspruch 7, **dadurch gekennzeichnet, dass** die Mittel zur Erleichterung der Strömung innerhalb der Verbindung weiterhin eine elastische Dichtung (408) aufweisen, die am Anschluss des Förderers (407) positioniert ist.

9. Verbindung von konzentrierenden Solarkraftwerken gemäß einem der Ansprüche 5-8, **dadurch gekennzeichnet, dass** von den seitlichen Naben (402) der Kompensationsvorrichtung beide gerade oder beide gekrümmt oder eine gekrümmt und eine gerade ist.

10. Verbindung von konzentrierenden Solarkraftwerken gemäß einem der vorangehenden Ansprüche, **dadurch gekennzeichnet, dass** sie einen Strahlungsschild aufweist.

## Revendications

1. Raccord de centrales solaires à concentration, comprenant deux bornes (301, 302 ; 301', 302') pour un couplage aux tubes métalliques internes respectifs de deux tuyaux solaires à connecter, lesdites bornes (301, 302 ; 301', 302') étant pourvues de moyens de couplage mobile mécanique rigide réciproque, lesdits moyens de couplage mobile mécanique rigide réciproque comprenant un écrou à oeillet (303, 303') assemblé sur l'une desdites bornes (302, 302') et libre de tourner autour de celle-ci, l'autre borne (301, 301') étant pourvue sur sa circonférence externe
- d'une pluralité de broches (305) s'ajustant dans un nombre correspondant de fentes façonnées et inclinées, réalisées sur ledit écrou à oeillet (303) ; ou
- d'un filetage (305') entrant en prise avec un contre-filetage correspondant (305 ") réalisé sur ledit écrou à oeillet (303') ;
chacun desdits moyens de couplage mobile mécanique rigide réciproque desdites bornes (301, 302 ; 301', 302') comprenant au moins un siège (311', 311"), pour le logement d'une partie respective d'une broche anti-rotation (312', 312").

2. Raccord de centrales solaires à concentration selon la revendication 1, **caractérisé en ce que** lesdites bornes (301, 302 ; 301', 302') sont couplées auxdits tubes métalliques desdits tuyaux solaires par soudure.

3. Raccord de centrales solaires à concentration selon l'une quelconque des revendications précédentes, **caractérisé en ce que** lesdits moyens de couplage mobile mécanique rigide réciproque desdits bornes (301, 302 ; 301', 302') comprennent en outre un siège pour le logement d'un joint statique élastique (310, 310'), réalisé alternativement sur l'une desdites deux bornes (301, 302 ; 301', 302').

4. Raccord de centrales solaires à concentration selon l'une quelconque des revendications précédentes, **caractérisé en ce que** chacun desdits moyens de couplage mobile mécanique rigide réciproque desdits bornes (301, 302 ; 301', 302') comprend au moins deux sièges (311', 311"), de tailles ou de formes différentes, pour le logement respectif d'une partie respective de deux broches anti-rotation (312', 312"), de taille ou de forme correspondante.

5. Raccord de centrales solaires à concentration selon l'une quelconque des revendications précédentes, **caractérisé en ce que** chacune desdites deux bornes (301, 302 ; 301', 302') est connectée à une borne correspondante d'un appareil de compensation comprenant un soufflet métallique (401), connecté au moyen d'une soudure à des moyeux latéraux (402) connectant le soufflet aux deux bornes (403, 404) se reliant auxdites deux bornes (301, 302 ; 301', 302') couplées auxdits tubes métalliques internes du tuyau solaire, et comprenant en outre des moyens de renfort et de protection contre des contraintes mécaniques due à un alignement axial imparfait du système et des moyens pour faciliter l'écoulement à l'intérieur du raccord.

6. Raccord de centrales solaires à concentration selon la revendication 5, **caractérisé en ce que** lesdits moyens de renfort et de protection contre des contraintes mécaniques comprennent une pluralité de tiges d'accouplement (405), supportées par des brides (406) elles-mêmes couplées audit soufflet métallique (401) et auxdits moyeux latéraux (402).

7. Raccord de centrales solaires à concentration selon la revendication 5 ou 6, **caractérisé en ce que** lesdits moyens pour faciliter l'écoulement dans le raccord comprennent un système de convoyage télescopique (407).

8. Raccord de centrales solaires à concentration selon la revendication 7, **caractérisé en ce que** lesdits moyens pour faciliter l'écoulement dans le raccord comprennent en outre un joint élastique (408), positionné au niveau de la borne dudit convoyeur (407).

9. Raccord de centrales solaires à concentration selon l'une quelconque des revendications 5-8, **caractérisé en ce que** lesdits moyeux latéraux (402) dudit appareil de compensation sont tous les deux rectilignes, ou tous les deux courbes, ou bien l'un est courbe et l'autre est rectiligne.

10. Raccord de centrales solaires à concentration selon l'une quelconque des revendications précédentes, **caractérisé en ce qu'**il comprend un écran de protection contre les rayonnements.
